# EUROPÄISCHE PATENTANMELDUNG

(11) **EP 4 763 907 A1**
(43) Veröffentlichungstag der Anmeldung: **24.06.2026**
(21) Anmeldenummer: 24221000.3
(22) Anmeldetag: 18.12.2024
(51) Int. Cl.: C08K 5/5399, C08L 69/00, C08L 33/02, C08K 5/00

(54) **FLAMMSCHUTZMITTELZUBEREITUNG SOWIE ZUSAMMENSETZUNG UND THERMOPLASTISCHE FORMMASSE ENTHALTEND DIE FLAMMSCHUTZMITTELZUBEREITUNG**

(71) Anmelder: Covestro Deutschland AG, 51373 Leverkusen (DE)
(72) Erfinder: Klein, Patrick, 51063 Köln (DE); Seidel, Andreas, 41542 Dormagen (DE); Taschner, Vera, 40764 Langenfeld (DE)
(74) Vertreter: Levpat

(57) **Zusammenfassung**

Die vorliegende Erfindung betrifft eine Flammschutzmittelzubereitung enthaltend
A) eine Verbindung oder eine Zusammensetzung aus mehreren Verbindungen, wobei die Verbindung oder die Zusammensetzung Stickstoff und Phosphor aber keine Amino- und Ammoniumgruppen enthält, und
B) ein Polymer enthaltend Brönstedt-saure Gruppen enthaltende Struktureinheiten oder deren Salze, wobei der Gehalt an Brönstedt-saure Gruppen enthaltenden Struktureinheiten oder deren Salze in der Komponente B mindestens 50 Gew.% beträgt.
sowie eine Zusammensetzung enthaltend die Flammschutzmittelmischung und ein Polymer, die Verwendung der Flammschutzmittelmischung zur Reduzierung des brennenden Abtropfens von Polymeren in einem Flammschutztest, eine thermoplastische Formmasse hergestellt aus der Zusammensetzung sowie Formkörper enthaltend die Zusammensetzung oder erhalten aus der thermoplastischen Formmasse.

## Beschreibung

Die vorliegende Erfindung betrifft eine Flammschutzmittelzubereitung, eine Zusammensetzung enthaltend ein Polymer und diese Flammschutzmittelzubereitung, eine aus einer solchen Zusammensetzung erhaltene thermoplastische Formmasse sowie die Verwendung der Flammschutzmittelzubereitung zur Reduzierung des brennenden Abtropfens bei einer Flammschutzprüfung des Polymers.

Heutzutage werden in unzähligen Anwendungen thermoplastische Polymere eingesetzt. Häufig erfordern jedoch die Anwendungen die Ausrüstung der Polymere mit Flammschutzadditiven (auch Flammschutzmittel genannt), um die intrinsisch vorhandene Brennbarkeit zu reduzieren und die regulatorischen Anforderungen zu erfüllen. Reguliert werden aber nicht nur Flammschutzeigenschaften, die ein Material für eine bestimmte Anwendung aufweisen muss. Zunehmend werden auch die Flammschutzmittel selbst einer kritischen Betrachtung unterzogen und der Einsatz reglementiert oder sogar verboten.

Beispielsweise können halogenierte Flammschutzmittel im Brandfall umweltschädliche und toxische Brandgase freisetzen. Daher wird in vielen Ländern der Einsatz solcher Flammschutzmittel eingeschränkt.

Bei der Bewertung der Brandeigenschaften eines Werkstoffs nach der weit verbreiteten UL 94 V Norm werden verschiedene Kriterien betrachtet. Zum einen ist die Nachbrennzeit, also die Zeit, die eine einmal entzündete Probe bis zum selbstständigem Erlöschen weiterbrennt, relevant. Weiterhin führt ein Abtropfen von brennendem Material zu einer Herabstufung der erreichten Klassifizierung.

Zur Vermeidung dieses brennenden Abtropfens wird vielen thermoplastischen Polymeren wie etwa Polycarbonat seit langer Zeit Polytetrafluorethylen (PTFE) als effektives Antitropfmittel zugesetzt. PTFE und die bei der Herstellung eingesetzten Tenside gehören zur Produktklasse der polyfluorierten Alkylsubstanzen (PFAS), aus der eine Vielzahl der Vertreter aber z.B. unter der Europäischen Chemikalienverordnung REACH als besonders besorgniserregende Stoffe eingestuft sind. Für solche besonders besorgniserregende Stoffe gelten im Rahmen der REACH Verordnung besondere Auskunftspflichten und es ist mit einer strengen Einschränkung der zugelassenen Verwendungen zu rechnen. Daher ist für die Verbesserung des Abtropfverhaltens von Polymeren die Entwicklung von alternativen, PFAS freien Flammschutzmitteln oder Flammschutzmittelzubereitungen von großem Interesse.

WO 2008/051120 A1 offenbart ein flammhemmendes Additiv für Polymere, wobei das Additiv ein Polyacrylat in Kombination mit a) mindestens einem Zinkborat, b) mindestens einem Silikonharz und c) Aluminiumoxidtrihydrat oder Magnesiumhydroxid oder einem Gemisch daraus umfasst, wobei das Additiv frei von Halogenen, Antimonoxid und phosphorhaltigen Substanzen ist.

Es werden aber keine Versuche beschrieben, bei denen kein Abtropfen von Schmelze im Brandtest aufgetreten ist.

Ein Vermeiden des brennenden Abtropfens ist aber notwendig, um eine sehr gute Flammschutzklassifizierung (UL94 V-0 oder UL94 V-1) zu erreichen, damit auf den Einsatz von PFAS verzichtet werden kann.

WO2017/222448 A1 offenbart ein halogenfreies Flammschutzadditiv für Polymere enthaltend
a) eine Phosphor-Stickstoff-haltige Komponente enthaltend Amin und/oder Ammoniumgruppen und
b) ein (Meth)acrylsäure-haltiges Homo- oder Copolymer, ausgewählt aus der Gruppe von partiell oder vollständig neutralisierten Salzen der Poly(meth)acrylsäure, ein partiell oder vollständig neutralisiertes Salz einer teilweise vernetzten Poly(meth)acrylsäure, ein teilweise oder vollständig neutralisiertes Salz eines Copolymers bestehend aus Olefin und (Meth)acrylsäure und Kombinationen aus den genannten Polymeren.

In WO2017/222448 A1 wird auch ein Mechanismus zur Wirkung von Amin haltigen Phosphorverbindungen in Verbindung mit Carboxylgruppen postuliert.

Außer der eigentlichen Flammschutzwirkung kommt es bei der Auswahl von geeigneten Flammschutzadditiven auf weitere Kriterien an. So sollte das Flammschutzadditiv weitere Eigenschaften der Polymerzusammensetzungen (im Folgenden auch vereinfacht als Zusammensetzungen bezeichnet) bzw. daraus hergestellter thermoplastischer Formmassen, in denen das Additiv zum Einsatz kommen soll, insbesondere deren mechanische Charakteristik wie Zähigkeit sowie wie thermische Stabilität, Stabilität gegenüber Einfluss von Feuchtigkeit nur möglichst gering beeinträchtigen. Mangelnde thermische Stabilität kann sich in einem Abbau des Molekulargewichts bis hin zur Abspaltung von niedermolekularen Fragmenten (Abbauprodukten) niederschlagen. So ist beispielweise bei Polycarbonaten eine Freisetzung von Bisphenol-A zu vermeiden, weil die Menge dieser Substanz in Polycarbonat-Formmassen und den daraus hergestellten Formkörpern ebenfalls durch derzeit diskutierte regulatorische Maßnahmen eingeschränkt werden soll.

Es war also wünschenswert, eine Flammschutzmittelzubereitung bereitzustellen, mit der das brennende Abtropfen von Polymerzusammensetzungen und daraus hergestellten thermoplastischen Formmassen sowie wiederum daraus hergestellten Formkörpern bei der Flammschutzprüfung gemäß UL 94 V reduziert wird und wobei die Flammschutzmittelzubereitung keine bewusst hinzugegebenen polyfluorierten Alkylsubstanzen (PFAS), insbesondere kein Polytetrafluorethylen (PTFE), und bevorzugt auch keine bewusst hinzugegeben chlor- und/oder bromhaltigen Substanzen umfasst. Weiterhin war es wünschenswert, dass Formkörper hergestellt aus den Formmassen eine hohe Zähigkeit zeigen. Weiter bevorzugt war es wünschenswert, dass Formmassen enthaltend das thermoplastische Polymer und die Flammschutzmittelzubereitung eine hohe thermische Stabilität, d.h. eine hohe Integrität des Polymermolekulargewichtes und eine geringe Neigung zur Bildung niedermolekularer oder oligomerer Bestandteile bedingt durch thermische Exposition initiierte Rückspaltung aufweisen. Im Falle von Zusammensetzungen und thermoplastischen Formmassen enthaltend Kondensationspolymere war es weiterhin wünschenswert, dass diese eine geringe Hydrolyseempfindlichkeit aufweisen.

Überraschenderweise wurde gefunden, dass eine Flammschutzmittelzubereitung enthaltend
A) eine Verbindung oder eine Zusammensetzung aus mehreren Verbindungen, wobei die Verbindung oder die Zusammensetzung Stickstoff und Phosphor aber keine Amino- und Ammoniumgruppen enthält, und
B) ein Polymer enthaltend Brönstedt-saure Gruppen enthaltende Struktureinheiten oder deren Salze, wobei der Gehalt an Brönstedt-saure Gruppen enthaltenden Struktureinheiten oder deren Salze in der Komponente B mindestens 50 Gew.% beträgt,
die erfindungsgemäße Aufgabe löst.

Der Begriff "Zubereitung" umfasst im Sinne der vorliegenden Anmeldung keinerlei Einschränkung bezüglich des Verfahrens zu dessen Herstellung. In diesem Sinne wird unter einer "Zubereitung" im Rahmen dieser Anmeldung also allgemein eine beliebige Zusammensetzung enthaltend die Komponenten A und B verstanden, ohne dass diese beispielsweise spezielle, d.h. genauer definierte Zubereitungs- oder Mischungsverfahrensschritte durchlaufen haben muss. In bevorzugter Ausführung handelt es sich bei der Flammschutzmittelzubereitung aber um eine innige, d.h. weitestgehend homogene Mischung ihrer Komponenten. Beispielsweise und bevorzugt kann diese aus pulverförmigen Komponenten A und B in einem Containermischer der Fa. Mixaco Dr. Herfeld GmbH & Co. KG (Neuenrade, Deutschland) oder in vergleichbaren Hochenergiemischaggregaten anderer Hersteller hergestellt werden.

Die Flammschutzmittelzubereitung enthält keine bewusst hinzugefügten Halogene und damit auch keine polyfluorierten Alkylsubstanzen (PFAS) und trotzdem kann ein brennendes Abtropfen in der Flammschutzprüfung gemäß UL94V deutlich reduziert oder sogar ganz vermieden werden. Gegenüber einer aus dem Stand der Technik bekannten Flammschutzmittelmischung sind weiterhin die Zähigkeit sowie die thermische Stabilität und die Hydrolysestabilität damit flammwidrig ausgerüsteter Polymerzusammensetzungen und daraus erhaltener thermoplastischer Formmassen verbessert.

Bevorzugt enthält die Flammschutzmittelmischung
60 bis 99,5 Gew.-Teile, weiter bevorzugt 70 bis 99 Gew.-Teile, am meisten bevorzugt 80 bis 98 Gew.-Teile, jeweils bezogen auf in Summe 100 Gew.-Teile der Komponenten A und B, der Komponente A und
0,5 bis 40 Gew.-Teile, weiter bevorzugt 1 bis 30 Gew.-Teile, am meisten bevorzugt 2 bis 20 Gew.-Teile, jeweils bezogen auf in Summe 100 Gew.-Teile der Komponenten A und B, der Komponente B.

Ein weiterer Gegenstand der vorliegen Erfindung ist eine Zusammensetzung enthaltend die Komponenten A und B der vorgenannten Flammschutzmittelzubereitung und ein Polymer, bevorzugt ein thermoplastisches Polymer, als Komponente C. Das thermoplastische Polymer ist bevorzugt ausgewählt aus der Gruppe bestehend aus Polycarbonaten, Polyestercarbonaten, Polyestern, Polyolefinen, Vinyl(co)polymeren und Polyamiden sowie Mischungen daraus.

Die Bezeichnung "ein Polymer" bei Komponente A der Flammschutzmittelzubereitung umfasst auch Mischungen verschiedener unter die Definition der Komponente A fallende Verbindungen. "Eine Verbindung" ist also als "mindestens eine Verbindung" zu verstehen. Dies gilt analog für die in der erfindungsgemäßen Flammschutzmittelzubereitung zum Einsatz kommende Komponente B sowie für die Bestandteile in der erfindungsgemäßen Polymerzusammensetzung und deren Monomer-/Strukturbausteine.

Die Zusammensetzung enthält bevorzugt
1 bis 40 Gew-Teile, weiter bevorzugt 3 bis 30 Gew.-Teile, besonders bevorzugt 5 bis 20 Gew.-Teile, jeweils bezogen auf in Summe 100 Gew.-Teile Polymer und Flammschutzmittelzubereitung, der Flammschutzmittelzubereitung bestehend aus den Komponenten A und B und
60 bis 99 Gew-Teile, weiter bevorzugt 70 bis 97 Gew.-Teile, besonders bevorzugt 80 bis 95 Gew.-Teile, jeweils bezogen auf in Summe 100 Gew.-Teile Polymer und Flammschutzmittelzubereitung, des Polymers gemäß Komponente C.

Optional enthält die Zusammensetzung als Komponente D ein Polymeradditiv wie unten benannt. Bevorzugt kommt Komponente D, sofern sie zum Einsatz kommt, in einer Menge von 0,01 bis 30 Gew.-Teilen, weiter bevorzugt von 0,05 bis 10 Gew.-Teilen, am meisten bevorzugt von 0,1 bis 5 Gew.-Teilen, bezogen auf in Summe 100 Gew.-Teile der Komponenten A bis C, zum Einsatz. Bevorzugt sind weiterhin Zusammensetzungen bestehend zu mindestens 98 Gew.-%, weiter bevorzugt zu mindestens 99 Gew.-% aus den hier benannten Komponenten. Besonders bevorzugt sind Zusammensetzungen bestehend aus den hier benannten Komponenten, d.h. der Flammschutzmittelzubereitung, Polymer und Polymeradditiven.

Ein weiterer Gegenstand der vorliegenden Erfindung ist die Verwendung einer Flammschutzmittelzubereitung enthaltend
A) eine Verbindung oder eine Zusammensetzung aus mehreren Verbindungen, wobei die Verbindung oder die Zusammensetzung Stickstoff und Phosphor aber keine Amino- und Ammoniumgruppen enthält, und
B) ein Polymer enthaltend Brönstedt-saure Gruppen enthaltende Struktureinheiten oder deren Salze, wobei der Gehalt an Brönstedt-saure Gruppen enthaltenden Struktureinheiten oder deren Salze in der Komponente B mindestens 50 Gew.% beträgt,

zur Reduzierung des brennenden Abtropfens eines Polymers, bevorzugt eines thermoplastischen Polymers, in einem Flammschutztest, bevorzugt nach UL 94 V, weiter bevorzugt zur Erzielung einer V-1- oder V-0-Bewertung in diesem Flammschutztest, weiter bevorzugt zur Erzielung einer V-0-Bewertung, bevorzugt bei einer Dicke von 3,0 mm.

Die im Rahmen dieser Erfindung genannten bevorzugten Ausführungsformen für die Komponenten der Flammschutzmittelzubereitung und des thermoplastischen Polymers gelten auch für die erfindungsgemäße Zusammensetzung, die erfindungsgemäße Verwendung sowie die unten genannte erfindungsgemäße Formmasse und die erfindungsgemäßen Formkörper.

### Komponente A

Als Komponente A wird in der Flammschutzmittelzubereitung eine Verbindung oder eine Zusammensetzung aus mehreren Verbindungen eingesetzt, wobei die Verbindung oder die Zusammensetzung Stickstoff und Phosphor, aber keine Amino- und Ammoniumgruppen enthält. Bevorzugt handelt es sich bei Komponente A um eine Verbindung, die sowohl Stickstoff als auch Phosphor, aber keine Aminogruppe und auch keine Ammoniumgruppe enthält. Beispiele solcher Verbindungen sind Phosphornitride und Phosphazene.

Bevorzugt wird als Komponente A ein Phosphazen eingesetzt, wobei das Phosphazen keine Aminogruppe und keine Ammoniumgruppe enthält. Bevorzugte Phosphazene sind Verbindungen der Formeln (1) und (2) 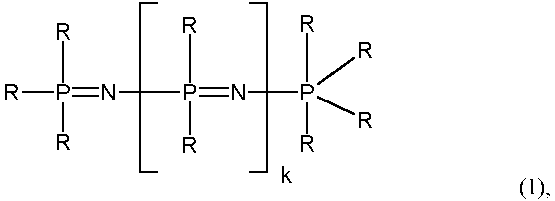 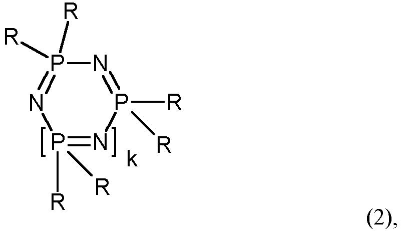 wobei
- R: gleich oder verschieden sind und jeweils für
- C₁- bis C₈-Alkyl, vorzugsweise Methyl, Ethyl, Propyl oder Butyl,
- C₁- bis C₈- Alkoxy, vorzugsweise Methoxy, Ethoxy, Propoxy oder Butoxy,
- gegebenenfalls durch Alkyl, vorzugsweise C₁-C₄-Alkyl, substituiertes C₅- bis C₆-Cycloalkyl,
- gegebenenfalls durch Alkyl, vorzugsweise C₁-C₄-Alkyl und/oder Hydroxy-substituiertes, C₆- bis C₂₀-Aryloxy, vorzugsweise Phenoxy, Naphthyloxy,
- gegebenenfalls durch Alkyl, vorzugsweise C₁-C₄-Alkyl, substituiertes C₇- bis C₁₂-Aralkyl, vorzugsweise Phenyl-C₁-C₄-alkyl, oder
- einen OH-Rest stehen und
- k: für 0 oder eine ganze Zahl von 1 bis 15, vorzugsweise für eine Zahl von 1 bis 10 steht.

Auch wenn es grundsätzlich unerwünscht ist, ist es herstellungsbedingt bisweilen unvermeidlich, dass gewisse Anteile des Phosphazens gemäß Formel (1) oder (2) am Phosphor (partiell) Halogen-, insbesondere Chlor-substituiert vorliegen, da die erfindungsgemäßen Phosphazene oft aus Halogen-, insbesondere Chlor-substituierten Phosphazenen durch nukleophile Substitution hergestellt werden und die Vollständigkeit dieser Substitution nicht immer sichergestellt werden kann. Insofern können als erfindungsgemäße Phosphazene auch solche, verfahrensbedingte Restmengen an Halogen, insbesondere Chlor enthaltenden Phosphazene zum Einsatz kommen. In diesen Phosphazenen ist der Anteil an Halogen, insbesondere Chlor bevorzugt kleiner als 1000 Gew.-ppm, weiter bevorzugt kleiner 500 Gew.-ppm, insbesondere kleiner 100 Gew.-ppm und am meisten bevorzugt kleiner 50 Gew.-ppm.

In einer weiter bevorzugten Ausführungsform werden nur Phosphazene mit gleichem R eingesetzt.

Bevorzugt sind cyclische Phosphazene gemäß Formel (2), weiter bevorzugt sind Propoxyphosphazen, Phenoxyphosphazen, Methylphenoxyphosphazen und Phosphazene der folgenden Strukturen:

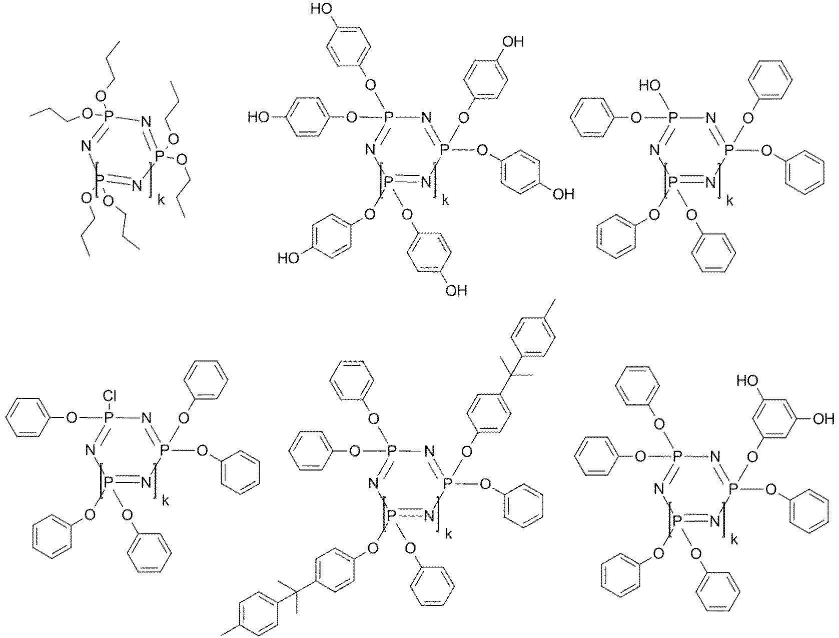

In den oben gezeigten Verbindungen ist k = 1, 2 oder 3.

Ganz besonders bevorzugt sind cyclische Phosphazene gemäß Formel (2) mit einem Anteil an Oligomeren mit k = 1 (Trimere) von 60 bis 99,99 mol.-%, weiter bevorzugt von 70 bis 99,5 mol.-%. Weiter bevorzugt sind Phosphazene gemäß Formel (3), bei der alle Reste R Phenoxyreste sind: 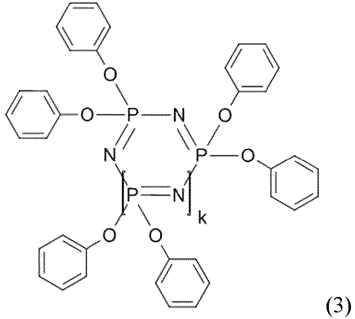 Bevorzugt ist die Komponente A ein Phenoxyphosphazen, besonders bevorzugt gemäß Formel (3), mit einem Trimerenanteil (k=1) von 65 bis 99,9 mol.-%, einem Tetramerenanteil (k=2) von 0,1 bis 35 mol.-%, einem Anteil an höheren oligomeren Phosphazene (k=3,4,5,6 und 7) von 0 bis 20 mol.-% und einem Anteil an Phosphazen-Oligomeren mit k>= 8 von 0 bis 2 mol.-%, jeweils bezogen auf die Komponente A.

Die Phosphazene und deren Herstellung sind beispielsweise in EP-A 728 811, DE-A 1 961668 und WO 97/40092 beschrieben.

Geeignete Phosphazene sind beispielsweise Rabitle^{™} FP 110 (Fushimi, Japan) oder HPCTP (Hexaphenoxycyclotriphosphazen) der Firma Weihai Jinwei ChemIndustry Co. Ltd.

Die Oligomer-Zusammensetzungen der Phosphazene in den jeweiligen Thermoplastproben lassen sich auch nach Compoundieren mittels ³¹P NMR nachweisen und quantifizieren (chemische Verschiebung; δ trimer: 6,5 bis 10,0 ppm; δ tetramer: -10 bis -13,5 ppm; δ höhere Oligomere: -16,5 bis -25,0 ppm).

### Komponente B

Als Komponente B enthält die erfindungsgemäße Flammschutzmittelzubereitung ein Polymer enthaltend Brönstedt-saure Gruppen enthaltende Struktureinheiten oder deren Salze, wobei der Gehalt an Brönstedt-saure Gruppen enthaltenden Struktureinheiten oder deren Salze in der Komponente B mindestens 50 Gew.% beträgt.

Im Falle, dass als Komponente B eine Mischung mehrerer solcher Polymere zum Einsatz kommt, beträgt der Gehalt an Brönstedt-saure Gruppen enthaltenden Struktureinheiten oder deren Salze in jedem einzelnen dieser Polymere mindestens 50 Gew.%.

Bei den Brönstedt-sauren Gruppen kann es sich beispielsweise um Carboxygruppen und/oder Sulfonsäuregruppen handeln. Bevorzugt handelt es sich bei den Brönstedt-sauren Gruppen um Carboxygruppen und dementsprechend bei der Komponente B um ein Polymer enthaltend Struktureinheiten abgeleitet von einer Carbonsäure oder ein Salz eines solchen Polymers. Enthaltend Struktureinheiten "abgeleitet von einer Carbonsäure" bedeutet im Kontext dieser Erfindung, dass bei der Herstellung der Komponente B eine Carbonsäure eingesetzt wird. Die Carbonsäure hat neben den im Polymer verbleibenden Carboxygruppen weitere polymerisierbare Gruppen und/oder Kohlenstoff-Kohlenstoff Doppelbindungen und liegt dann im Polymer in die Polymerkette kovalent eingebaut vor.

Bevorzugt handelt es sich bei der Carbonsäure um eine ungesättigte Carbonsäure, das heißt sie enthält Kohlenstoff-Kohlenstoff Doppelbindungen.

Bevorzugte Carbonsäuren sind Acrylsäure, Methacrylsäure, Maleinsäure, Fumarsäure, Zimtsäure, Sorbinsäure, Itaconsäure und Crotonsäure, weiter bevorzugt Acrylsäure und Methacrylsäure, am meisten bevorzugt Acrylsäure.

Es ist auch möglich, als Komponente B ein Copolymer einzusetzen enthaltend Struktureinheiten abgeleitet von mehreren Monomeren, wobei mindestens eines der Monomere mindestens eine Brönstedt-saure Gruppen enthält und wobei der Gehalt an Brönstedt-saure Gruppen enthaltenden Struktureinheiten oder deren Salze in der Komponente B mindestens 50 Gew.% beträgt. Weiterhin können dann Struktureinheiten enthalten sein von einem Monomeren, das keine Brönstedt-saure Gruppen enthält.

Dieses weitere Monomer kann beispielsweise ein Olefin sein. Bevorzugte Olefine als Bestandteil der Copolymere sind α-Olefine und weisen besonders bevorzugt zwischen 2 und 10 Kohlenstoff-Atomen auf und können unsubstituiert oder mit einer oder mehreren aliphatischen, cycloaliphatischen oder aromatischen Gruppen substituiert sein.

Ganz besonders bevorzugte Olefine sind ausgewählt aus der Gruppe umfassend Ethen, Propen, 1-Buten, 1-Penten, 1-Hexen, 1-Octen, 3-Methyl-1-penten. Insbesondere bevorzugte Olefine sind Ethen und Propen, ganz besonders bevorzugt ist Ethen. Ebenfalls geeignet sind Mischungen der beschriebenen Olefine.

Ebenso kann das weitere Monomer ein Vinylmonomer sein ausgewählt aus der Gruppe bestehend aus (Meth)Acrylsäure-(C₁ bis C₈)-Alkylester (wie beispielsweise Methylmethacrylat, n-Butylacrylat, tert.-Butylacrylat), Carbonsäureanhydride, Vinylaromaten (wie beispielsweise Styrol, α-Methylstyrol) und Vinylcyaniden (ungesättigte Nitrile wie beispielsweise Acrylnitril und Methacrylnitril).

Weiter bevorzugt wird aber kein weiteres Monomer außer dem oder den Brönstedt-saure Gruppen enthaltenen Monomeren eingesetzt. In dem Fall, dass mehrere Brönstedt-saure Gruppen enthaltenen Monomeren eingesetzt werden, können diese Monomere alle die gleichen Brönstedt-sauren Gruppen, bevorzugt alle Carboxygruppen, enthalten. Die verschiedenen Monomere können aber auch unterschiedliche Arten von Brönstedt-sauren Gruppen enthalten. Beispiele hierfür sind Copolymere aus einem Monomeren enthaltend Carboxygruppen und einem Monomeren enthaltend Sulfonsäuregruppen. Bevorzugt sind hier Copolymere aus mindestens einem Vertreter ausgewählt aus der Gruppe bestehend aus Acrylsäure, Methacrylsäure, Maleinsäure, Fumarsäure, Zimtsäure, Sorbinsäure, Itaconsäure und Crotonsäure, bevorzugt Acrylsäure, Methacrylsäure und Maleinsäure, am meisten bevorzugt Maleinsäure, und mindestens einem Vertreter ausgewählt aus der Gruppe der Sulfonsäuregruppen-substituierten Vinylmonomere, bevorzugt 4-Styrolsulfonsäure.

Bei den Salzen der Brönstedt-saure Gruppen enthaltenen Polymeren handelt es sich um Verbindungen, bei denen die Brönstedt-sauren Gruppen, bevorzugt die Carbonsäuregruppen, teilweise oder vollständig, bevorzugt teilweise neutralisiert sind durch Kationen enthaltende Basen, vorzugsweise ausgewählt aus Natrium und Zink, besonders bevorzugt Natrium. Solche Verbindungen enthaltend neutralisierte Säuregruppen werden auch als Ionomere bezeichnet. Der Anteil der neutralisierten Carbonsäuregruppen kann zwischen 5 und 100 % liegen und beträgt bevorzugt 10 bis 70 %. Wenn das Metallkation eine Wertigkeit von zwei hat wie beispielsweise das Zinkkation, kann ein Metallkation zwei einwertige Brönstedt-saure Gruppen neutralisieren, die aus zwei Polymerketten stammen. Damit kann eine ionische Verbindung dieser Ketten über das Metallkation stattfinden. Kommerziell sind solche Copolymere enthaltend teilweise mit Metallkationen neutralisierte Carbonsäuregruppen unter dem Handelsnamen Surlyn^{™} (DuPont) oder Ionia^{™} (SK Functional Polymer) erhältlich.

Besonders bevorzugt handelt es sich bei der Komponente B um Polyacrylsäure, Polymethacrylsäure, Salze der Polyacrylsäure oder Polymethacrylsäure oder Mischungen der genannten Komponenten. Am meisten bevorzugt sind Polyacrylsäure und Salze der Polyacrylsäure.

Es ist auch möglich, dass Komponente B in Form eines Masterbatches eingesetzt wird. Dabei wird die Komponente B in einem Thermoplasten wie beispielsweise einem Polyolefin und ggf. weiteren Zusatzstoffen verteilt und als eine solche Mischung eingesetzt. Der Anteil der Komponente B im Masterbatch beträgt bevorzugt 5 bis 95 Gew.-%, weiter bevorzugt 40 bis 90 Gew.-%. Der oben angegebene Anteil der Komponente B in der Flammschutzmittelmischung bezieht sich auf die reine Komponente B, d.h. ohne Berücksichtigung der anderen Bestandteile des Masterbatches.

### Komponente C: Polymer

Die Flammschutzmittelzubereitung eignet sich zur Verbesserung der Flammschutzeigenschaften von Polymeren, die sowohl thermoplastische als auch duromere Eigenschaften aufweisen können. Bevorzugt wird die Flammschutzmittelzubereitung zur Verbesserung der Flammschutzeigenschaften von thermoplastischen Polymeren sowie von ein- oder mehrphasigen Mischungen (Blends) mehrerer (thermoplastischer) Polymere eingesetzt.

Beispielhaft als thermoplastische Polymere gemäß Komponente C seien hier genannt Polycarbonate, Polyester, Polyestercarbonate, Polyacetale (wie Polyoxymethylen und Polyphenylenether), Polyamide, Polyolefine, Polyimide, thermoplastische Polyurethane, Polysulfone, Polyarylate, Polyarylether, optional kautschukmodifiziert Vinyl(co)polymere einschließlich AcrylnitrilButadien-Styrol, Polyacrylate, Polyarylsulfone, Polyarylsulfide, Polyethersulfone, Polyetheramide, Polyphenylensulfid, Polyetherketone, Polyamidimide, Polyetherimide und Polyesterimide.

Das Polymer ist bevorzugt ausgewählt aus der Gruppe bestehend aus Polycarbonaten, Polyestercarbonaten, Polyestern, Polyolefinen, Vinyl(co)polymeren und Polyamiden.

Weiter bevorzugt sind dabei aromatische Gruppen enthaltende thermoplastische Polymere.

Weiter bevorzugt ist das Polymer ausgewählt aus der Gruppe bestehend aus Polycarbonaten, Polyestercarbonaten und Polyestern, noch weiter bevorzugt ausgewählt aus der Gruppe bestehend aus Polycarbonaten und Polyestercarbonaten, besonders bevorzugt ausgewählt aus der Gruppe der Polycarbonate.

Erfindungsgemäß geeignete Polycarbonate und/oder Polyestercarbonate gemäß Komponente C sind literaturbekannt oder nach literaturbekannten Verfahren herstellbar (zur Herstellung von Polycarbonaten siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung von Polyestercarbonaten, z. B. DE-A 3 007 934).

Die Herstellung erfindungsgemäß als Komponente C geeigneter Polycarbonate erfolgt z. B. durch Umsetzung von Dihydroxyarylverbindungen (auch als aromatische Diole, Diphenole oder Bisphenole bezeichnet) und/oder aliphatischen Diolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Trihydroxyaryl- oder Tetrahydroxyaryl-Verbindungen. Ebenso ist eine Herstellung über ein Schmelzepolymerisationsverfahren durch Umsetzung von Dihydroxyarylverbindungen und/oder aliphatischen Diolen mit Kohlensäureestern, beispielsweise Diphenylcarbonat möglich.

Zur Herstellung der erfindungsgemäß als Komponente C geeigneten Polycarbonate und/oder zur Herstellung der erfindungsgemäß als Komponente C geeigneten Polyestercarbonate geeignete Dihydroxyarylverbindungen sind vorzugsweise solche der Struktur (4) 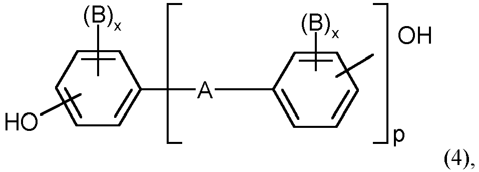 wobei
A eine Einfachbindung, C₁ bis C₅-Alkylen, C₂ bis C₅-Alkyliden, C₅ bis C₆-Cycloalkyliden, -O-, -SO-, -CO-, -S-, -SO₂-, C₆ bis C₁₂-Arylen, an das weitere aromatische gegebenenfalls Heteroatome enthaltende Ringe kondensiert sein können,
   oder ein Rest der Struktur (5) oder (6) 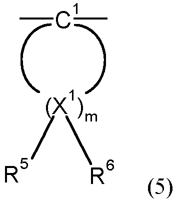 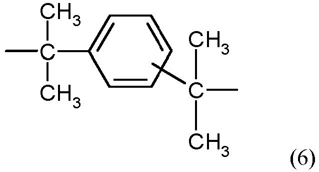
B jeweils C₁ bis C₁₂-Alkyl, vorzugsweise Methyl, Halogen, vorzugsweise Chlor und/oder Brom
x jeweils unabhängig voneinander 0, 1 oder 2,
p 1 oder 0 sind, und
R⁵ und R⁶ für jedes X¹ individuell wählbar, unabhängig voneinander Wasserstoff oder C₁ bis C₆-Alkyl, vorzugsweise Wasserstoff, Methyl oder Ethyl,
X 1 Kohlenstoff und
m eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte zum Einsatz kommende Dihydroxyarylverbindungen sind Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α-α'-Bis-(hydroxyphenyl)-diisopropylbenzole, Phthalimidine, abgeleitet von Isatin- oder Phenolphthaleinderivaten, sowie deren kernalkylierte, kernarylierte und kernhalogenierte Verbindungen.

Weiter bevorzugte zum Einsatz kommende Dihydroxyarylverbindungen sind 4,4'-Dihydroxydiphenyl, Bisphenol-A, 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, Dimethyl-Bisphenol A, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol und 1,1-Bis-(4-hydroxyphenyl)-3,3,5-trimethylcyclohexan, sowie Dihydroxyarylverbindungen (I) bis (III)

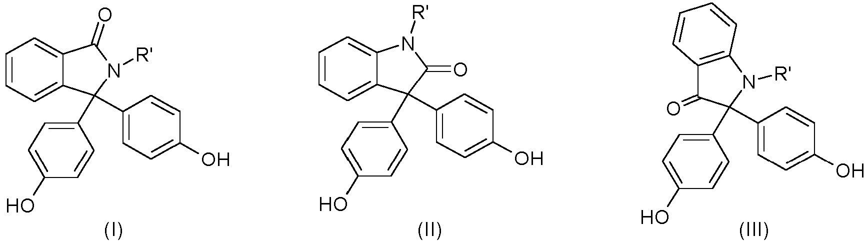

Diese und weitere geeignete Dihydroxyarylverbindungen sind z.B. in US 3 028 635 A, US 2 999 835 A, US 3 148 172 A, US 2 991 273 A, US 3 271 367 A, US 4 982 014 A und US 2 999 846 A, in DE 1 570 703 A, DE 2063 050 A, DE 2 036 052 A, DE 2 211 956 A und DE 3 832 396 A, in FR 1 561 518 A, in der Monographie "H. Schnell, Chemistry and Physics of Polycarbonates, Interscience Publishers, New York 1964" sowie in JP 62039/1986 A, JP 62040/1986 A und JP 105550/1986 A beschrieben.

Es können diese Dihydroxyarylverbindungen einzeln oder als beliebige Mischungen eingesetzt werden. Die Dihydroxyarylverbindungen sind literaturbekannt oder nach literaturbekannten Verfahren erhältlich.

Geeignete aliphatische Diole sind ausgewählt wird aus der Gruppe, bestehend aus 1,2-Cyclohexandiol, 1,3-Cyclohexandiol, 1,4-Cyclohexandiol, 1,2-Cyclohexandimethanol, 1,3-Cyclohexandimethanol, 1,4-Cyclohexandimethanol, 2,2-bis(4-Hydroxycyclohexyl)propan, Tetrahydro-2,5-furandimethanol, 2-Butyl-2-ethyl-1,3-propandiol, 2-(2-Hydroxy-ethoxy)ethanol, 2,2,4,4-Tetramethyl-1,3-cyclobutandiol, 2,2,4-Trimethyl-1,3-pentandiol, 2,2-Dimethylpropan-1,3-diol, Cyclobutan-1,1-diyldimethanol, 8-(Hydroxymethyl)-3-tricyclo[5.2.1.02,6]decanyl]methanol, 1,2-Propandiol, 1,3-Propandiol, 1,4-Butandiol, 1,5-Pentandiol, 1,6-Hexandiol, 1,8-Octandiol, Isosorbid und beliebigen Mischungen daraus.

Für die Herstellung der Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10 Mol%, bezogen auf die Molsumme der jeweils eingesetzten Dihydroxyarylverbindungen.

Die thermoplastischen, aromatischen Polycarbonate haben mittlere Molekulargewichte (Gewichtsmittel M_{w}) von bevorzugt 15 bis 50 kg/mol, weiter bevorzugt 18 bis 35 kg/mol, besonders bevorzugt von 24 bis 32 kg/mol, gemessen durch GPC (Gelpermeationschromatographie) unter Verwendung von Dichlormethan als Lösungsmittel, Kalibrierung mit linearen Polycarbonaten (aus Bisphenol A und Phosgen) bekannter Molmassenverteilung der PSS Polymer Standards Service GmbH, Deutschland, Kalibrierung nach der Methode 2301-0257502-09D (aus dem Jahre 2009 in deutscher Sprache) der Currenta GmbH & Co. OHG, Leverkusen. Das Elutionsmittel ist Dichlormethan. Säulenkombination aus vernetzten Styrol-Divinylbenzolharzen. Durchmesser der analytischen Säulen: 7,5 mm; Länge: 300 mm. Partikelgrößen des Säulenmaterials: 3 µm bis 20 µm. Konzentration der Lösungen: 0,2 Gew.-%. Flussrate: 1,0 ml/min, Temperatur der Lösungen: 30°C. Verwendung einer UV- und/oder RI-Detektion.

Die Polycarbonate können in bekannter Weise verzweigt sein, und zwar vorzugsweise durch den Einbau von 0,05 bis 2,0 Mol%, bezogen auf die Summe der eingesetzten Dihydroxyarylverbindungen, an dreifunktionellen oder mehr als dreifunktionellen Verbindungen, beispielsweise solchen mit drei und mehr phenolischen Gruppen. Bevorzugt werden lineare Polycarbonate, weiter bevorzugt lineare Polycarbonate ausschließlich auf Basis von Bisphenol-A eingesetzt.

Geeignet sind sowohl Homopolycarbonate als auch Copolycarbonate. Zur Herstellung erfindungsgemäßer Copolycarbonate gemäß Komponente C können auch 1 bis 25 Gew.%, vorzugsweise 2,5 bis 25 Gew.%, bezogen auf die Gesamtmenge an einzusetzenden Dihydroxyarylverbindungen, Polydiorganosiloxane mit Hydroxyaryloxy-Endgruppen eingesetzt werden. Diese sind bekannt (US 3 419 634) und nach literaturbekannten Verfahren herstellbar. Die Herstellung der auf diesem Wege erhaltenen polydiorganosiloxanhaltiger Copolycarbonate ist beispielsweise in der DE-A 3 334 782 und WO2015/052106 A2 beschrieben.

Bevorzugt sind auch Copolycarbonate, zu deren Herstellung Diphenole der allgemeinen Formel (6a) eingesetzt wurden: 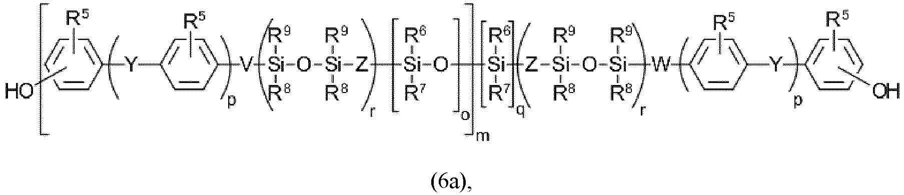 wobei
R⁵ für Wasserstoff oder C₁- bis C₄- Alkyl, C₁- bis C₃-Alkoxy, vorzugsweise für Wasserstoff; Methoxy oder Methyl, steht,
R⁶, R⁷, R⁸ und R⁹ jeweils unabhängig voneinander für C₁- bis C₄-Alkyl oder C₆- bis C₁₂-Aryl, vorzugsweise für Methyl oder Phenyl stehen,
Y für eine Einfachbindung, SO₂-, -S-, -CO-, -O-, C₁- bis C₆-Alkylen, C₂- bis C₅-Alkyliden, C₆- bis C₁₂-Arylen, welches gegebenenfalls mit weiteren Heteroatome enthaltenden aromatischen Ringen kondensiert sein kann oder für einen C₅- bis C₆-Cycloalkylidenrest, der ein- oder mehrfach mit C₁-bis C₄-Alkyl substituiert sein kann, bevorzugt für eine Einfachbindung, -O-, Isopropyliden oder für einen C₅- bis C₆-Cycloalkylidenrest, der ein- oder mehrfach mit C₁- bis C₄-Alkyl substituiert sein kann, steht,
V für Sauerstoff, C₂- bis C₆-Alkylen oder C₃- bis C₆-Alkyliden, bevorzugt für Sauerstoff oder C₃-Alkylen,
p, q und r jeweils unabhängig für 0 oder 1 stehen,
wenn q = 0 ist, W für eine Einfachbindung steht, wenn q = 1 und r = 0 ist, W für Sauerstoff, C₂- bis C₆-Alkylen oder C₃- bis C₆-Alkyliden, bevorzugt für Sauerstoff oder C₃-Alkylen steht,
wenn q = 1 und r = 1 ist, W und V jeweils unabhängig für C₂- bis C₆-Alkylen oder C₃- bis C₆-Alkyliden, bevorzugt C₃-Alkylen steht,
Z für ein C₁- bis C₆-Alkylen, bevorzugt C₂-Alkylen steht,
o für eine durchschnittliche Anzahl von Wiederholungseinheiten von 10 bis 500, bevorzugt 10 bis 100 steht, und
m für eine durchschnittliche Anzahl von Wiederholungseinheiten von 1 bis 10, bevorzugt 1 bis 6, weiter bevorzugt 1,5 bis 5 steht. Ebenso ist es möglich, dass Diphenole verwendet werden, in denen zwei oder mehrere Siloxanblöcke der allgemeinen Formel (6a) über Terephthalsäure und/oder Isophthalsäure miteinander unter Ausbildung von Estergruppen verknüpft sind.

Insbesondere bevorzugt sind (Poly)Siloxane der Formeln (7) und (8) 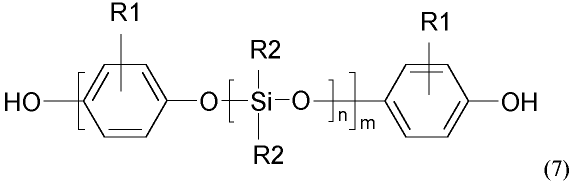 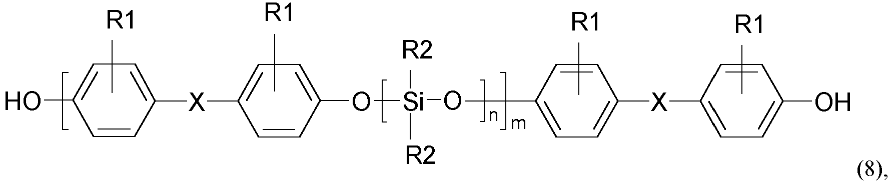 wobei R1 für Wasserstoff, C₁- bis C₄-Alkyl, vorzugsweise für Wasserstoff oder Methyl steht und insbesondere bevorzugt für Wasserstoff,
R2 unabhängig voneinander für Aryl oder Alkyl, bevorzugt für Methyl,
X für eine Einfachbindung, -SO₂-, -CO-, -O-, -S-, C₁- bis C₆-Alkylen, C₂- bis C₅-Alkyliden oder für C₆- bis C₁₂-Arylen, welches gegebenenfalls mit weiteren Heteroatome enthaltenden aromatischen Ringen kondensiert sein kann, steht,
X bevorzugt für eine Einfachbindung, C₁- bis C₅-Alkylen, C₂- bis C₅-Alkyliden, C₅- bis C₁₂-Cycloalkyliden, -O-, -SO- -CO-, -S-, -SO₂-, besonders bevorzugt steht X für eine Einfachbindung, Isopropyliden, C₅- bis C₁₂-Cycloalkyliden oder Sauerstoff, und ganz besonders bevorzugt für Isopropyliden steht,
n eine durchschnittliche Zahl von 10 bis 400, bevorzugt 10 und 100, insbesondere bevorzugt 15 bis 50 bedeutet und
m für eine durchschnittliche Zahl von 1 bis 10, bevorzugt von 1 bis 6 und insbesondere bevorzugt von 1,5 bis 5 steht.

Ebenso bevorzugt kann der Siloxanblock von folgender Struktur abgeleitet sein 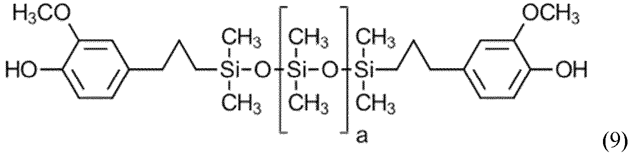 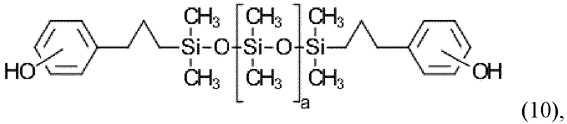 bevorzugt (10a) 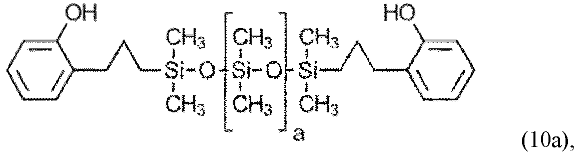 oder 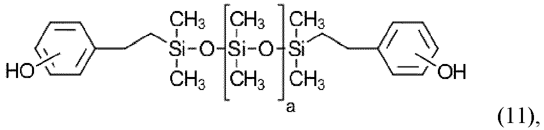 wobei a in Formel (9), (10), (10a) und (11) für eine durchschnittliche Zahl von 10 bis 400, bevorzugt 10 bis 100 und besonders bevorzugt für 15 bis 50 steht.

Dabei ist es ebenso bevorzugt, dass mindestens zwei gleiche oder verschiedene der Siloxanblöcke der allgemeinen Formeln (9), (10), (10a) oder (11) über Terephthalsäure und/oder Isophthalsäure miteinander unter Ausbildung von Estergruppen verknüpft sind.

Ebenso ist es bevorzugt, wenn in der Formel (6a) p = 0 ist, V für C₃-Alkylen steht, r = 1 ist, Z für C₂-Alkylen steht, R⁸ und R⁹ für Methyl stehen, q = 1 ist, W für C₃-Alkylen steht, m = 1 ist, R⁵ für Wasserstoff oder C₁- bis C₄-Alkyl, vorzugsweise für Wasserstoff oder Methyl, steht, R⁶ und R⁷ jeweils unabhängig voneinander für C₁- bis C₄-Alkyl, vorzugsweise für Methyl stehen und o für 10 bis 500 steht.

Copolycarbonate mit Monomereinheiten der Formel (6a) und insbesondere auch deren Herstellung sind in der WO 2015/052106 A2 beschrieben.

Copolycarbonate mit Monomereinheiten der Formel (9) und insbesondere auch deren Herstellung sind in der WO 2015/052106 A2 beschrieben.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure. Besonders bevorzugt sind Gemische der Disäuredichloride der Isophthalsäure und der Terephthalsäure im Verhältnis zwischen 1:20 und 20:1. Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁ bis C₂₂-Alkylgruppen oder durch Halogenatome substituiert sein können, sowie aliphatische C₂ bis C₂₂-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichlorid.

Bei der Herstellung von aromatischen Polyestercarbonaten kann zusätzlich eine oder mehrere aromatische Hydroxycarbonsäure eingesetzt werden.

Die aromatischen Polyestercarbonate können sowohl linear als auch in bekannter Weise verzweigt sein (siehe dazu DE-A 2 940 024 und DE-A 3 007 934), wobei lineare Polyestercarbonate aber bevorzugt sind.

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbon-säuretetrachlorid oder Pyromellithsäuretetrachlorid oder drei-oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxyphenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4- [4-hydroxyphenyl-isopropyl] - phenoxy)-methan, 1,4-Bis[4,4'-dihydroxytri-phenyl]-methyl]-benzol, in Mengen von 0,01 bis 1,0 Mol% bezogen auf eingesetzte Diphenole verwendet werden. Phenolische Verzweigungsmittel können mit den Diphenolen vorgelegt werden. Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 99,9 Mol%, insbesondere bis zu 80 Mol%, besonders bevorzugt bis zu 50 Mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

In Frage kommende Polyester sind in bevorzugter Ausführungsform aromatisch, weiter bevorzugt handelt es sich um Polyalkylenterephthalate. Es handelt sich hierbei in besonders bevorzugter Ausführungsform um Reaktionsprodukte aus aromatischen Dicarbonsäuren oder ihren reaktionsfähigen Derivaten, wie Dimethylester oder Anhydride, und aliphatischen, cycloaliphatischen oder araliphatischen Diolen sowie Mischungen dieser Reaktionsprodukte.

Besonders bevorzugte aromatische Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 Gew-%, bezogen auf die Diolkomponente Ethylenglykol- und/oder Butandiol-1,4-Reste.

Die bevorzugten aromatischen Polyalkylenterephthalate können neben Terephthalsäurerestern bis zu 20 mol-%, vorzugsweise bis zu 10 mol-%, Reste anderer aromatischer oder cycloaliphatischer Dicarbonsäuren mit 8 bis 14 C-Atomen oder aliphatischer Dicarbonsäuren mit 4 bis 12 C Atomen enthalten, wie z.B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure.

Die bevorzugten aromatischen Polyalkylenterephthalate können neben Ethylenglykol bzw. Butandiol-1,4-Resten bis zu 20 mol-%, vorzugsweise bis zu 10 mol-%, andere aliphatische Diole mit 3 bis 12 C Atomen oder cycloaliphatische Diole mit 6 bis 21 C Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-β-hydroxyethoxy-phenyl)-propan und 2,2-Bis-(4-hydroxypropoxyphenyl)-propan (DE-A 2 407 674, 2 407 776, 2 715 932).

Besonders bevorzugt sind aromatische Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Bevorzugte Mischungen von aromatischen Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Die aromatischen Polyalkylenterephthalate lassen sich nach bekannten Methoden herstellen (s. z.B. Kunststoff-Handbuch, Band VIII, S. 695 ff., Carl-Hanser-Verlag, München 1973).

Bei dem Polymer kann es sich auch um ein Polyolefin handeln.

Polyolefine werden durch Kettenpolymerisation, beispielsweise durch radikalische oder anionische Polymerisation, hergestellt. Als Monomere werden Alkene eingesetzt. Eine alternative Bezeichung für Alkene ist Olefine. Die Monomere können einzeln oder als Mischung verschiedener Monomere polymerisiert werden.

Bevorzugte Monomere sind Ethylen, Propylen, 1-Buten, Isobuten 1-Penten, 1-Hepten, 1-Okten und 4-Methyl-1-Penten.

Die Polyolefine können < 50 Gew.-%, weiter bevorzugt bis zu 30 Gew.-% ein oder mehrere unterschiedliche vinylische Comonomere enthalten, beispielsweise Styrol, Acrylnitril, Glycidylmethacrylat, Maleinsäureanhydrid, Acrylsäure und Methacrylsäure sowie Methylacrylat, Ethylacrylat, Butylacrylat und Methylmethacrylat, wobei Methylacrylat, Ethylacrylat, Butylacrylat und Methylmethacrylat bevorzugt sind.

Die Polyolefine sind meist teilkristallin und können linear oder verzweigt sein. Die Herstellung von Polyolfinen ist dem Fachmann seit langem bekannt.

Die Polymerisation kann beispielsweise bei Drücken von 1 bis 3000 bar und Temperaturen zwischen 20°C und 300°C durchgeführt werden, gegebenenfalls unter Einsatz eines Katalysatorsystems. Als Katalysatoren eignen sich beispielsweise Mischungen aus Titan- und Aluminiumverbindungen sowie Metallocene.

Durch Veränderung der Polymerisationsbedingungen und des Katalysatorsystems können die Anzahl der Verzeigungen, die Kristallinität und die Dichte der Polyolefine in weiten Bereichen variiert werden. Auch diese Maßnahmen sind dem Fachmann geläufig.

Das als thermoplastisches Polymer gemäß Komponente C geeignete Vinyl(co)polymer kann kautschukfrei oder kautschukmodifiziert sein. Ebenso kann sowohl kautschukmodifiziertes Vinyl(co)polymer als auch kautschukfreies, das heiß nicht chemisch an einen Kautschuk gebundenes oder in diesem Kautschuk eingeschlossenes kautschukfreies Vinyl(co)polymer enthalten sein.

Bei dem kautschukmodifizierten Vinyl(co)polymer handelt es sich bevorzugt um Pfropfpolymerisate von
20 bis 95 Gew.-% mindestens eines Vinylmonomeren auf
5 bis 80 Gew.-% einer oder mehrerer kautschukartiger, in bevorzugter Ausführungsform partikulärer Pfropfgrundlagen, vorzugsweise mit Glasübergangstemperaturen < 10 °C, weiter bevorzugt < 0 °C, besonders bevorzugt < -20 °C,
wobei die aus den Vinlymonomeren gebildeten Polymerketten, zumindest teilweise, chemisch an die Oberfläche der Pfropfgrundlage als Pfropfhülle gebunden sind oder im Volumen der Pfropfgrundlage so eingeschlossen sind, dass sie bei der Herstellung und Verarbeitung der erfindungsgemäßen Zusammensetzungen nicht aus dieser Pfropfgrundlage austreten. Weiterhin können die Pfropfpolymerisate herstellungsbedingt (Co)Polymer aus den Vinylmonomeren enthalten, welches weder an die Pfropfgrundlage kovalent gebunden, noch im Inneren der Pfropfgrundlage eingeschlossen ist (sogenanntes "freies" (Co)Polymer). Dieser Anteil des freien (Co)Polymers ist in geeigneten Lösungsmitteln, beispielsweise in Toluol oder Aceton, extrahierbar und lässt sich insofern durch Gravimetrie des löslichen Rückstands über eine Massenbilanz quantifizieren.

Die Glasübergangstemperatur wird mittels dynamischer Differenzkalorimetrie (DSC) gemäß der DIN EN ISO 11357-1-6 (Version von 2016) bei einer Heizrate von 10 K/min mit Definition der Tg als Mittelpunkttemperatur (Tangentenmethode) bestimmt.

Die bevorzugten partikulären Pfropfgrundlagen haben im Allgemeinen eine mittlere Teilchengröße (d50-Wert) von 0,05 bis 10 µm, vorzugsweise 0,1 bis 5 µm, besonders bevorzugt 0,2 bis 1,5 µm. Die mittlere Teilchengröße d50 ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-l796) bestimmt werden.

Die Vinylmonomere sind vorzugsweise Gemische aus
50 bis 99 Gew.-%, bevorzugt 65 bis 85 Gew.-%, bevorzugt 70 bis 80 Gew.-%, jeweils bezogen auf die Gesamtheit der Monomere der Pfropfhülle, Vinylaromaten und/oder kernsubstituierten Vinylaromaten (wie Styrol, α-Methylstyrol, p-Methylstyrol, p-Chlorstyrol) und/oder (Meth)Acrylsäure-(C1-C8)-Alkylester, wie Methylmethacrylat, Ethylmethacrylat und Butylacrylat, und
1 bis 50 Gew.-%, bevorzugt 15 bis 35 Gew.-%, besonders bevorzugt 20 bis 30 Gew.-%, jeweils bezogen auf die Gesamtheit der Monomere der, Vinylcyanide (ungesättigte Nitrile wie Acrylnitril und Methacrylnitril) und/oder (Meth)Acrylsäure-(C1-C8)-Alkylester, wie Methylmethacrylat, n-Butylacrylat, t-Butylacrylat, und/oder Derivate (wie Anhydride und Imide) ungesättigter Carbonsäuren, beispielsweise Maleinsäureanhydrid und N-Phenyl-Maleinimid.

Bevorzugte sind dabei Gemische aus sind aus mindestens einem der Monomere Styrol, α-Methylstyrol und Methylmethacrylat mit mindestens einem der Monomere Acrylnitril, n-Butylacrylat, Maleinsäureanhydrid und Methylmethacrylat.

Besonders bevorzugte sind Gemische aus Styrol und Acrylnitril. Ebenso bevorzugt werden Methylmethacrylat, oder Gemische aus Methylmethacrylat und Styroleingesetzt.

Für die Pfropfpolymerisate geeignete Pfropfgrundlagen sind beispielsweise Dienkautschuke, EP(D)M-Kautschuke, also solche auf Basis Ethylen/Propylen und gegebenenfalls Dien, Acrylat-, Polyurethan-, Silikon-, Chloropren- und Ethylen/Vinylacetat-Kautschuke sowie Silikon/Acrylat-Kompositkautschuke.

Bevorzugte Pfropfgrundlagen sind Dienkautschuke, beispielsweise auf Basis Butadien und Isopren, oder Gemische von Dienkautschuken oder Copolymerisate von Dienkautschuken oder deren Gemischen mit weiteren copolymerisierbaren Monomeren.

Besonders bevorzugt als Pfropfgrundlage ist reiner Polybutadienkautschuk.

Besonders bevorzugte Pfropfpolymerisate sind beispielsweise ABS-Polymerisate, wie sie z.B. in der DE-OS 2 035 390 (=US PS 3 644 574) oder in der DE-OS 2 248 242 (=GB-PS 1 409 275) bzw. in Ullmanns, Enzyklopädie der Technischen Chemie, Bd. 19 (1980), S. 280 ff. beschrieben sind. Die Pfropfcopolymerisate werden durch radikalische Polymerisation, z.B. durch Emulsions-, Suspensions-, Lösungs- oder Massepolymerisation hergestellt.

Kautschukfreie Vinyl(co)polymere sind (Co)Polymerisate von mindestens einem Vinylmonomeren, bevorzugt ausgewählt aus der Gruppe der Vinylaromaten, Vinylcyanide (ungesättigte Nitrile), (Meth)Acrylsäure-(C1 bis C8)-Alkylester, ungesättigte Carbonsäuren sowie Derivate (wie Anhydride und Imide) ungesättigter Carbonsäuren.

Insbesondere geeignet sind (Co)Polymerisate aus
50 bis 99 Gew.-%, bevorzugt 65 bis 85 Gew.-%, besonders bevorzugt 70 bis 80 Gew.-%, bezogen auf das (Co)Polymerisat, mindestens eines Monomeren ausgewählt aus der Gruppe der Vinylaromaten (wie beispielsweise Styrol, α-Methylstyrol), kernsubstituierten Vinylaromaten (wie beispielsweise p-Methylstyrol, p-Chlorstyrol) und (Meth)Acrylsäure-(C1-C8)-Alkylester (wie beispielsweise Methylmethacrylat, n-Butylacrylat, tert.-Butylacrylat)
   und
1 bis 50 Gew.-%, bevorzugt 15 bis 35 Gew.-%, besonders bevorzugt 20 bis 30 Gew.-%, bezogen auf das (Co)Polymerisat, mindestens eines Monomeren ausgewählt aus der Gruppe der Vinylcyanide (wie beispielsweise ungesättigte Nitrile wie Acrylnitril und Methacrylnitril), (Meth)Acrylsäure-(C1-C8)-Alkylester (wie beispielsweise Methylmethacrylat, n-Butylacrylat, tert.-Butylacrylat), ungesättigte Carbonsäuren und Derivate ungesättigter Carbonsäuren (beispielsweise Maleinsäureanhydrid und N-Phenyl-Maleinimid).

Als Polymere geeignet sind weiterhin amorphe und/oder semi-kristalline Polyamide. Geeignete Polyamide sind beispielweise aliphatische Polyamide, zum Beispiel PA-6, PA-11, PA-12, PA-4,6, PA-4,8, PA-4,10, PA-4,12, PA-6,6, PA-6,9, PA-6,10, PA-6,12, PA-10,10, PA-12,12, PA-6/6,6-Copolyamid, PA-6/12-Copolyamid, PA-6/11-Copolyamid, PA-6,6/11-Copolyamid, PA-6,6/12-Copolyamid, PA-6/6,10-Copolyamid, PA-6,6/6,10-Copolyamid, PA-4,6/6-Copolyamid, PA-6/6,6/6,10-Terpolyamid, und Copolyamid aus 1,4-Cyclohexandicarbonsäure und 2,2,4- und 2,4,4-Trimethylhexamethylendiamin, aromatische Polyamide, zum Beispiel PA-6,1, PA-6,1/6,6-Copolyamid, PA-6,T, PA-6,T/6-Copolyamid, PA-6,T/6,6-Copolyamid, PA-6,1/6,T-Copolyamid, PA-6,6/6,T/6,1-Copolyamid, PA-6,T/2-MPMDT-Copolyamid (2-MPMDT = 2-Methylpentamethylendiamin), PA-9,T, Copolyamid aus Terephthalsäure, 2,2,4- und 2,4,4-Trimethylhexamethylendiamin, Copolyamid aus Isophthalsäure, Laurinlactam und 3,5-Dimethyl-4,4-diaminodicyclohexylmethan, Copolyamid aus Isophthalsäure, Azelainsäure und/oder Sebacinsäure und 4,4-Diaminodicyclohexylmethan, Copolyamid aus Caprolactam, Isophthalsäure und/oder Terephthalsäure und 4,4-Diaminodicyclohexylmethan, Copolyamid aus Caprolactam, Isophthalsäure und/oder Terephthalsäure und Isophorondiamin, Copolyamid aus Isophthalsäure und/oder Terephthalsäure und/oder weiteren aromatischen oder aliphatischen Dicarbonsäuren, optional alkylsubstituiertem Hexamethylendiamin und alkylsubstituiertem 4,4-Diaminodicyclohexylamin oder deren Copolyamide sowie Mischungen zuvor genannter Polyamide. In einer weiteren Ausführungsform der vorliegenden Erfindung werden als Komponente C semi-kristalline Polyamide verwendet, welche vorteilhafte thermische Eigenschaften auf-weisen. Hierbei werden semi-kristalline Polyamide verwendet, welche einen Schmelzpunkt von mindestens 200 °C, bevorzugt von mindestens 220 °C, weiter bevorzugt von mindestens 240 °C und noch weiter bevorzugt von mindesten 260 °C aufweisen. Je höher der Schmelzpunkt der semi-kristallinen Polyamide, desto vorteilhafter ist das thermische Ver-halten der erfindungsmäßen Zusammensetzungen. Der Schmelzpunkt wird mittels DSC ermittelt.

Bevorzugte semi-kristalline Polyamide sind ausgewählt aus der Gruppe, enthaltend PA-6, PA-6,6, PA-6,10, PA-4,6, PA-11, PA-12, PA-12,12, PA-6,1, PA-6,T, PA-6,T/6,6-Copolyamid, PA-6,T/6-Copolyamid, PA-6/6,6-Copolyamid, PA-6,6/6,T/6,1-Copolyamid, PA-6,T/2-MPMDT-Copolyamid, PA-9,T, PA-4,6/6-Copolyamid und deren Mischungen oder Copolyamide.

Weiter bevorzugte semi-kristalline Polyamide sind PA-6,1, PA-6,T, PA-6,6, PA-6,6/6T, PA-6,6/6,T/6,1-Copolyamid, PA-6,T/2-MPMDT-Copolyamid, PA-9,T, PA-4,6 und deren Mischungen oder Copolyamide.

Besonders bevorzugt enthält die eingesetzte Komponente C ein Polycarbonat, weiter bevorzugt ein aromatisches Polycarbonat, besonders bevorzugt ein aromatisches Polycarbonat enthaltend Struktureinheiten abgeleitet von Bisphenol-A und weiter bevorzugt ein aromatisches Polycarbonat basierend ausschließlich auf Bisphenol-A als Diol-Komponente. Am meisten bevorzugt besteht die Komponente C aus dem in diesem Absatz genannten Polycarbonat.

Weiterhin bevorzugt ist die eingesetzte Komponente C eine Mischung enthaltend ein erstes Polymer ausgewählt aus der Gruppe bestehend aus einem Polycarbonat, weiter bevorzugt einem aromatischen Polycarbonat, besonders bevorzugt einem aromatischen Polycarbonat enthaltend Struktureinheiten abgeleitet von Bisphenol-A und am meisten bevorzugt einem aromatischen Polycarbonat basierend ausschließlich auf Bisphenol-A als Diol-Komponente und ein zweites Polymer ausgewählt aus der Gruppe bestehend aus Polyestercarbonaten, Polyestern, Vinyl(co)polymeren, Polyolefinen und Olefincopolymeren. Weiter bevorzugt ist die eingesetzte Komponente C eine Mischung bestehend aus einem ersten Polymer ausgewählt aus der Gruppe bestehend aus einem Polycarbonat, weiter bevorzugt einem aromatischen Polycarbonat, besonders bevorzugt einem aromatischen Polycarbonat enthaltend Struktureinheiten abgeleitet von Bisphenol-A und am meisten bevorzugt einem aromatischen Polycarbonat basierend ausschließlich auf Bisphenol-A als Diol-Komponente und aus einem zweiten Polymer ausgewählt aus der Gruppe bestehend aus Polyestercarbonaten, Polyestern, Vinyl(co)polymeren, Polyolefinen und Olefincopolymeren.

### Polymeradditive (Komponente D)

In der erfindungsgemäßen Zusammensetzung können als Komponente D ein oder mehrere Polymeradditive eingesetzt werden, bevorzugt ausgewählt aus der Gruppe bestehend aus weiteren von Komponenten A,B und C verschiedenen Flammschutzmitteln, Flammschutzsynergisten, Rauchinhibitoren, Gleit- und Entformungsmitteln, Nukleiermitteln, Leitfähigkeitsadditiven, Stabilisatoren (z.B. Hydrolyse-, Wärmealterungs- und UV-Stabilisatoren sowie Umesterungsinhibitoren), Füll- und Verstärkungsstoffen sowie Farbstoffen und Pigmenten.

In bevorzugter Ausführungsform wird mindestens ein Polymeradditiv ausgewählt aus der Gruppe bestehend aus Gleit- und Entformungsmitteln, Stabilisatoren, Farbstoffen und Pigmenten eingesetzt. In bevorzugter Ausführungsform wird als Stabilisator mindestens einen Vertreter ausgewählt aus der Gruppe bestehend aus sterisch gehinderten Phenolen, organischen Phosphiten und Schwefelbasierten Co-Stabilisatoren eingesetzt.

### Herstellung von Formmassen und Formkörpern

Aus den erfindungsgemäßen Zusammensetzungen enthaltend die erfindungsgemäße Flammschutzmittelzubereitung oder deren Komponenten A und B, Polymer gemäß Komponente C, sofern dieses thermoplastisch ist, und optional Polymeradditiven gemäß Komponente D können erfindungsgemäße thermoplastische Formmassen hergestellt werden.

Die thermoplastischen Formmassen können beispielsweise hergestellt werden, indem man die jeweiligen Bestandteile der Zusammensetzungen in bekannter Weise a) bevorzugt bei einer Temperatur im Bereich von 100°C bis 400°C, besonders bevorzugt bei 200 bis 350°C, ganz besonders bevorzugt bei 230°C bis 300°C aufschmilzt und durchmischt und b) die Zusammensetzung durch Abkühlung der Schmelze-Zusammensetzung nachfolgend verfestigt. Bevorzugt erfolgt dieser Prozess in üblichen Aggregaten wie beispielsweise Innenknetern, Extrudern und Doppelwellenschnecken. Dieser Prozess wird allgemein als (Schmelze)Compoundieren oder (Schmelze)Extrusion bezeichnet.

Unter thermoplastischer Formmasse wird also das Produkt verstanden, das erhaltend wird, wenn die Bestandteile der thermoplastischen Zusammensetzung schmelzecompoundiert und schmelzextrudiert werden.

Die Vermischung der einzelnen Bestandteile der Zusammensetzungen kann in bekannter Weise sowohl sukzessive als auch simultan erfolgen, und zwar sowohl bei etwa 20°C (Raumtemperatur) als auch bei höherer Temperatur. Das bedeutet, dass beispielsweise manche der Bestandteile über den Haupteinzug eines Extruders dosiert und die restlichen Bestandteile über einen Seitenextruder später im Compoundierverfahren zugeführt werden können.

Die Bestandteile der Flammschutzmittelzubereitung können bei der Herstellung der erfindungsgemäßen thermoplastischen Formmassen auch separat dem Compoundierungsverfahren zugeführt werden, d.h. es ist nicht erforderlich zuvor aus den Komponenten A und B eine erfindungsgemäße Flammschutzmittelzubereitung herzustellen und diese als solche dem Compoundierungsverfahren zuzuführen.

Ein weiterer Gegenstand der vorliegenden Erfindung ist somit eine thermoplastische Formmasse hergestellt aus einer erfindungsgemäßen Zusammensetzung enthaltend die Komponenten A, B, thermoplastisches Polymer C und optional D.

Die erfindungsgemäßen Formmassen können zur Herstellung von Formkörpern jeder Art verwendet werden. Diese können beispielsweise durch Spritzguss, Extrusion und Blasformverfahren hergestellt werden und sind ein weiterer Gegenstand der vorliegenden Erfindung. Eine weitere Form der Verarbeitung ist die Herstellung von Formkörpern durch Tiefziehen aus zuvor hergestellten Platten oder Folien.

Es ist auch möglich, die Bestandteile der Zusammensetzungen direkt in eine Spritzgussmaschine oder in ein Extrusionsaggregat zu dosieren und zu Formkörpern zu verarbeiten.

Beispiele für solche Formkörper, die aus den erfindungsgemäßen Zusammensetzungen und Formmassen hergestellt werden können, sind Folien, Profile, Formteile jeder Art, z.B. für das Transportwesen, insbesondere den Automobilbau, den Anwendungsbereich Elektro/Elektronik, den Baubereich, für Haushaltsgeräte und die Medizintechnik.

Solche Formkörper sind ebenfalls ein Gegenstand der vorliegenden Erfindung.

Nachfolgend werden weitere Ausführungsformen der vorliegenden Erfindung beschrieben:
1. Flammschutzmittelzubereitung enthaltend
   A) eine Verbindung oder eine Zusammensetzung aus mehreren Verbindungen, wobei die Verbindung oder die Zusammensetzung Stickstoff und Phosphor aber keine Amino- und Ammoniumgruppen enthält, und
   B) ein Polymer enthaltend Brönstedt-saure Gruppen enthaltende Struktureinheiten oder deren Salze, wobei der Gehalt an Brönstedt-saure Gruppen enthaltenden Struktureinheiten oder deren Salze in der Komponente B mindestens 50 Gew.% beträgt.
2. Flammschutzmittelzubereitung gemäß Ausführungsform 1, dadurch gekennzeichnet, dass Komponente A eine Verbindung ist, die sowohl Stickstoff als auch Phosphor enthält.
3. Flammschutzmittelzubereitung gemäß Ausführungsform 1, dadurch gekennzeichnet, dass die Komponente A ein Phosphazen ist.
4. Flammschutzmittelzubereitung gemäß Ausführungsform 3, dadurch gekennzeichnet, dass die Komponente A ein cyclisches Phosphazen gemäß Formel (2) ist 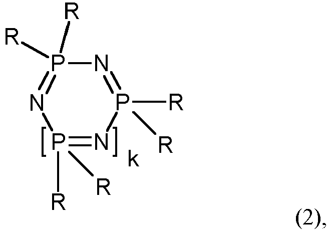 wobei
   - R: gleich oder verschieden sind und jeweils für
   - C₁- bis C₈-Alkyl, vorzugsweise Methyl, Ethyl, Propyl oder Butyl,
   - C₁- bis C₈- Alkoxy, vorzugsweise Methoxy, Ethoxy, Propoxy oder Butoxy,
   - gegebenenfalls durch Alkyl, vorzugsweise C₁-C₄-Alkyl, substituiertes C₅- bis C₆-Cycloalkyl,
   - gegebenenfalls durch Alkyl, vorzugsweise C₁-C₄-Alkyl und/oder Hydroxy-substituiertes, C₆- bis C₂₀-Aryloxy, vorzugsweise Phenoxy, Naphthyloxy,
   - gegebenenfalls durch Alkyl, vorzugsweise C₁-C₄-Alkyl, substituiertes C₇- bis C₁₂-Aralkyl, vorzugsweise Phenyl-C₁-C₄-alkyl, oder
   - einen OH-Rest stehen und
   - k: für 0 oder eine ganze Zahl von 1 bis 15, vorzugsweise für eine Zahl von 1 bis 10 steht.
5. Flammschutzmittelzubereitung gemäß Ausführungsform 4, dadurch gekennzeichnet, dass bei der Komponente A alle Reste R gleich sind.
6. Flammschutzmittelzubereitung gemäß Ausführungsform 4, dadurch gekennzeichnet, dass bei der Komponente A alle Reste R Phenoxyreste sind.
7. Flammschutzmittelzubereitung gemäß einer der Ausführungsformen 4 bis 6, dadurch gekennzeichnet, dass der Trimerenanteil (k=1) 60 bis 100 mol-%, bezogen auf die Komponente A, beträgt.
8. Flammschutzmittelzubereitung gemäß einer der vorhergehenden Ausführungsformen, dadurch gekennzeichnet, dass die Komponente B Carboxygruppen oder deren Salze enthält.
9. Flammschutzmittelzubereitung gemäß einer der vorhergehenden Ausführungsformen, dadurch gekennzeichnet, dass die Komponente B Struktureinheiten enthält abgeleitet von einem Monomeren ausgewählt aus der Gruppe bestehend aus Acrylsäure, Methacrylsäure, Maleinsäure und deren jeweiligen Salzen.
10. Flammschutzmittelzubereitung gemäß einer der vorhergehenden Ausführungsformen, dadurch gekennzeichnet, dass als Komponente B ein Polymer eingesetzt wird ausgewählt aus der Gruppe bestehend aus Polyacrylsäure, Polymethacrylsäure und den Salzen der Polyacrylsäure und Polymethacrylsäure.
11. Flammschutzmittelzubereitung gemäß einer der vorhergehenden Ausführungsformen 1 bis 9, dadurch gekennzeichnet, dass die Komponente B ein Natriumsalz einer Carboxygruppe enthält.
12. Flammschutzmittelzubereitung gemäß einer der vorhergehenden Ausführungsformen, dadurch gekennzeichnet, dass die Komponente B ein Natriumsalz der Polyacrylsäure oder Polymethacrylsäure enthält oder daraus besteht.
13. Flammschutzmittelzubereitung gemäß einer der vorhergehenden Ausführungsformen 1 bis 10, dadurch gekennzeichnet, dass die Komponente B Polyacrylsäure oder Polymethacrylsäure enthält oder daraus besteht.
14. Flammschutzmittelzubereitung gemäß einem der vorhergehenden Ausführungsformen enthaltend
   60 bis 99,5 Gew.-Teile, bezogen auf in Summe 100 Gew.-Teile der Komponenten A und B, der Komponente A und
   0,5 bis 40 Gew.-Teile, bezogen auf in Summe 100 Gew.-Teile der Komponenten A und B, der Komponente B.
15. Flammschutzmittelzubereitung gemäß einem der vorhergehenden Ausführungsformen enthaltend
   80 bis 98 Gew.-Teile, bezogen auf in Summe 100 Gew.-Teile der Komponenten A und B, der Komponente A und
   2 bis 20 Gew.-Teile, jeweils bezogen auf in Summe 100 Gew.-Teile der Komponenten A und B, der Komponente B.
16. Flammschutzmittelzubereitung gemäß einem der vorhergehenden Ausführungsformen, dadurch gekennzeichnet, dass weder Komponente A noch die Komponente B intentionell Halogen enthalten.
17. Zusammensetzung enthaltend eine Flammschutzmittelzubereitung oder deren Komponenten gemäß einem in den Ausführungsformen 1 bis 13 und 16 genannten Merkmal und mindestens ein Polymer gemäß Komponente C.
18. Zusammensetzung gemäß Ausführungsform 17, enthaltend in Summe 1 bis 40 Gew.-Teile der Komponenten A und B sowie 60 bis 99 Gew.-Teile der Komponente C, jeweils bezogen auf in Summe 100 Gew.-Teile der Komponenten A bis C.
19. Zusammensetzung gemäß Ausführungsform 17, enthaltend in Summe 3 bis 30 Gew.-Teile der Komponenten A und B sowie 70 bis 97 Gew.-Teile der Komponente C, jeweils bezogen auf in Summe 100 Gew.-Teile der Komponenten A bis C.
20. Zusammensetzung gemäß Ausführungsform 17, enthaltend in Summe 5 bis 20 Gew.-Teile der Komponenten A und B sowie 80 bis 95 Gew.-Teile der Komponente C, jeweils bezogen auf in Summe 100 Gew.-Teile der Komponenten A bis C.
21. Zusammensetzung gemäß einer der Ausführungsformen 17 bis 20, enthaltend die Komponenten A und B in den in einer der Ausführungsformen 14 und 15 genannten Mengenverhältnissen.
22. Zusammensetzung gemäß einer der Ausführungsformen 17 bis 21, wobei das Polymer gemäß Komponente C ein thermoplastisches Polymer ist.
23. Zusammensetzung gemäß Ausführungsform 22, dadurch gekennzeichnet, dass das thermoplastische Polymer gemäß Komponente C ausgewählt ist aus der Gruppe bestehend aus Polycarbonaten, Polyestercarbonaten, Polyestern, Polyolefinen, Vinyl(co)polymeren und Polyamiden sowie Mischungen daraus.
24. Zusammensetzung gemäß Ausführungsform 22, dadurch gekennzeichnet, dass das thermoplastische Polymer gemäß Komponente C ausgewählt ist aus der Gruppe bestehend aus Polycarbonaten, Polyestercarbonaten und Polyestern.
25. Zusammensetzung gemäß einer der Ausführungsformen 17 bis 24, dadurch gekennzeichnet, das die Zusammensetzung als Komponente D 0,01 bis 30 Gew.-Teile, bezogen auf in Summe 100 Gew.-Teile der Komponenten A bis C, mindestens eines Polymeradditivs verschieden von Komponenten A bis C enthält.
26. Zusammensetzung gemäß einer der Ausführungsformen 17 bis 25, dadurch gekennzeichnet, dass die Zusammensetzung frei ist von polyfluorierten Alkylsustanzen (PFAS).
27. Zusammensetzung gemäß einer der Ausführungsformen 17 bis 26, dadurch gekennzeichnet, dass die Zusammensetzung frei ist von intentionell Halogen enthaltenden Komponenten.
28. Verwendung einer Flammschutzmittelzubereitung enthaltend
   A) eine Verbindung oder eine Zusammensetzung aus mehreren Verbindungen, wobei die Verbindung oder die Zusammensetzung Stickstoff und Phosphor aber keine Amino- und Ammoniumgruppen enthält, und
   B) ein Polymer enthaltend Brönstedt-saure Gruppen enthaltende Struktureinheiten oder deren Salze, wobei der Gehalt an Brönstedt-saure Gruppen enthaltenden Struktureinheiten oder deren Salze in der Komponente B jeweils mindestens 50 Gew.% beträgt,
   zur Reduzierung des brennenden Abtropfens eines Polymers in einem Flammschutztest.
29. Verwendung gemäß Ausführungsform 28, wobei es sich bei dem Polymer um eine thermoplastisches Polymer handelt, welches ausgewählt ist aus der Gruppe bestehend aus Polycarbonaten, Polyestercarbonaten, Polyestern, Polyolefinen, Vinyl(co)polymeren und Polyamiden sowie Mischungen daraus.
30. Verwendung gemäß einer der Ausführungsformen 28 oder 29, wobei eine Flammschutzmittelzubereitung gemäß einer der Ausführungsformen 2 bis 16 eingesetzt wird.
31. Verwendung gemäß einer der Ausführungsformen 28 bis 30, wobei durch die Verwendung der Flammschutzmittelzubereitung in einem Flammschutztest nach UL94 V eine Bewertung V-1 oder V-0 bei einer Prüfkörperdicke von 3,2 mm oder bei einer Prüfkörperdicke kleiner als 3,2 mm erzielt wird.
33. Thermoplastische Formmasse hergestellt aus einer Zusammensetzung gemäß einer der Ausführungsformen 22 bis 27.
34. Formkörper enthaltend eine Zusammensetzung gemäß einer der Ausführungsformen 17 bis 27 oder erhalten aus einer thermoplastischen Formmasse gemäß Ausführungsform 33.

### Beispiele

### Zusammensetzung der Flammschutzmittelmischung

### Komponente A-1 (nicht erfindungsgemäß)

Ammoniumpolyphosphat mit einer Säurezahl von 1 mg KOH/g bestimmt nach ISO 2114, einer Wasserlöslichkeit von 0,4% (25 °C, 10% Suspension, Gravimetrie nach Filtration) und einer Korngröße von < 100 µm (Exolit AP 422, Clariant, Deutschland).

### Komponente A-2 (erfindungsgemäß):

Phenoxycyclophosphazen der Formel (3) mit einem Anteil an Oligomeren mit k = 1 von 70 mol.-%, einem Anteil an Oligomeren mit k = 2 von 18 mol.-% und einem Anteil an Oligomeren mit k > 3 von 12 mol.-% (Rabitle^{™} FP 110, Fushimi, Japan).

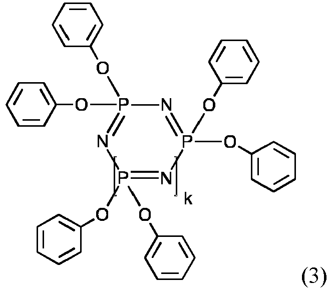

### B-1 (erfindungsgemäß)

Polyacrylsäure mit einem durchschnittlichen Molekulargewicht von ca. 450.000 g/mol (Mᵥ) (CAS-Nr. 9003-01-4, Polyacrylsäure, Sigma Aldrich, Deutschland).

### B-2 (erfindungsgemäß)

Polyacrylsäure Na Salz mit einem durchschnittlichen Molekulargewicht von ca. 5.100 g/mol (M_{w}) (CAS-Nr. 9003-04-7, Poly(acrylsäure-Natriumsalz), Sigma Aldrich, Deutschland).

### B-3 (erfindungsgemäß)

Polyacrylsäure part. Na Salz teilweise vernetzt

(CAS Nr. 76774-25-9, Poly(acrylsäure) partielles Natriumsalz, Copolymer bestehend aus 2-Propensäure Natriumsalz Trimethylolpropantriacrylat, Sigma Aldrich, Deutschland).

### B-4 (erfindungsgemäß)

Poly(4-styrolsulfonsäure-co-maleinsäure) Verhältnis Styrolsulfonsäure zu Maleinsäure 1:1, partielles Natriumsalz, mit einem durchschnittlichen Molekulargewicht von 20.000 g/mol (M_{w}) (CAS-Nr. 68037-40-1, Poly(4-styrolsulfonsäure-co-maleinsäure) Natriumsalz, Sigma Aldrich, Deutschland).

### B-5 (erfindungsgemäß)

Masterbatch einer teilweise mit Natrium neutralisierten Polyacrylsäure und Polyethylen im Verhältnis von etwa 1:1 (bestimmt über FTIR) mit einem Natriumgehalt von 4.3 % (bestimmt über ICP-OES)

(Paxymer^{™} BGMB62, Paxymer AB, Schweden).

### Thermoplastisches Polymer 1

Lineares Polycarbonat auf Basis von Bisphenol-A mit einem gewichtsgemittelten Molekulargewicht M_{w} von 25.000 g/mol (bestimmt durch GPC in Methylenchlorid als Lösungsmittel gegen einen Bisphenol A-Polycarbonat-Standard bei Raumtemperatur).

### Thermoplastisches Polymer 2

Lineares Polycarbonat auf Basis von Bisphenol-A mit einem gewichtsgemittelten Molekulargewicht M_{w} von 31.000 g/mol (bestimmt durch GPC in Methylenchlorid als Lösungsmittel gegen einen Bisphenol A-Polycarbonat-Standard bei Raumtemperatur).

### Herstellung der thermoplastischen Formmassen und Formkörper

Aus den thermoplastischen Zusammensetzungen gemäß Tabelle 1 wurden auf einem ZSK26 MC18-Doppelwellenextruder der Fa. Coperion GmbH (Stuttgart, Deutschland) bei einer Schmelzetemperatur am Düsenaustritt von etwa 260°C Formmassen hergestellt. Es wurde ein Unterdruck von 100 mbar (absolut) angelegt. Die Verweilzeit der Schmelzemischung im Extruder betrug etwa 30 s.

Die Formkörper für die Prüfungen wurden bei 260°C Massetemperatur und bei einer Werkzeugtemperatur von 80°C auf einer Spritzgießmaschine Typ Arburg 270 E hergestellt.

### Ausprüfung der aus den Formmassen hergestellten Formkörper

Zur Bestimmung des Gehaltes an freiem Bisphenol-A (verkürzt als [BPA] bezeichnet) wurden die im Extruder hergestellten Granulate in Dichlormethan gelöst und mit Aceton umgefällt. Der ausgefallene Polymeranteil wurde abfiltriert und das Filtrat mittels Hochdruckflüssigkeitschromatographie mit UV-Detektor (HPLC-UV) mit einem externen Standard analysiert. Als Säulenmaterial wurde eine C18-Phase eingesetzt und als Eluent Wasser und Methanol in einem Gradienten verwendet.

Als Maß für die Hydrolysebeständigkeit dient die Änderung des MVR (Schmelzefließrate) bei einer Lagerung des Granulats für 1 Tag bei 95°C und 100% relativer Luftfeuchtigkeit (bzw. für 7 Tage bei 95 °C und 100% relativer Luftfeuchtigkeit bei Bsp. V8 und 9). Der MVR wird bestimmt gemäß ISO 1133 (Version von 2012) bei 240 °C (bzw. 260 °C bei Bsp. V8 und 9) am im Extruder hergestellten Granulat unter Verwendung einer Stempellast von 2,16 kg (bzw. 5 kg bei Bsp. V8 und 9).

Die Flammwidrigkeit wird gemäß UL94V an Stäben der Abmessung 127 x 12,7 x 3,0 mm beurteilt. Dabei wurde ausgewertet, wie viele der 5 pro Formmasse hergestellten Stäbe ein brennendes Abtropfen zeigten.

Die Zähigkeit wurde bei Raumtemperatur an Prüfkörpern der Dimension von 60 mm x 60 mm x 2 mm im Durchstoßversuch gemäß ISO 6603-2 (Version von April 2002) ermittelt und die Durchstoßenergie in J gemessen.

**Tabelle 1: Polymerzusammensetzungen und ihre Eigenschaften**

| | **V1** | **V2** | **3** | **4** | **5** | **6** | **7** | **V8** | **9** |
|---|---|---|---|---|---|---|---|---|---|
| | **Gew. Teile** | **Gew. Teile** | **Gew. Teile** | **Gew. Teile** | **Gew. Teile** | **Gew. Teile** | **Gew. Teile** | **Gew. Teile** | **Gew. Teile** |
| Thermoplastisches Polymer I | 84 | 84 | 84 | 84 | 84 | 84 | 84 | | |
| Thermoplastisches Polymer II | | | | | | | | 93 | 93 |
| A-1 | 15 | 15 | | | | | | | |
| A-2 | | | 15 | 15 | 15 | 15 | 15 | 7 | 7 |
| B-1 | 0,82 | 1 | 0,82 | 1 | | | | | |
| B-2 | 0,18 | | 0,18 | | 1 | | | | |
| B-3 | | | | | | 1 | | | |
| B-4 | | | | | | | 1 | | |
| B-5 | | | | | | | | | 0,5 |

| **Eigenschaften** | | | | | | | | | |
|---|---|---|---|---|---|---|---|---|---|
| Stäbe ohne brennendes Abtropfen | 0 | 0 | 5 | 4 | 5 | 5 | 5 | 0 | 5 |
| BPA-Gehalt im Granulat [ppm] nach Compoundierung | 86 | 90 | 2 | 2 | 4 | 2 | 2 | 2 | 2 |
| MVR nach 0 und 1 Tagen bei 95 °C, 100% Luftfeuchtigkeit, Änderung in %, 240 °C, 2,16 kg | 22,3 | 56,8 | 24,9 | 29,1 | 11,5 | 15,9 | 11,7 | n.b. | n.b. |
| MVR nach 0 und 7 Tagen bei 95 °C, 100% Luftfeuchtigkeit, Änderung in %, 260 °C, 5 kg | | | | | | | | 23,5 | 24,8 |
| Durchstoß Gesamtenergie bei 23 °C [J] | 11 | 9 | 35 | 44 | 27 | 20 | 34 | 59 | 46 |

Die Daten in Tabelle 1 zeigen, dass mit der erfindungsgemäßen Komponente A-2 (erfindungsgemäße Beispiele 3 und 4) besseres Tropfverhalten im UL94V Test erreicht wird, als mit der im Stand der Technik verwendeten Komponente A-1 (Beispiele V1 und V2). Außerdem werden mit der Zusammensetzung enthaltend die erfindungsgemäße Komponente A-2 sowohl in Kombination mit Komponente B-1 (Beispiel 4), als auch in einer Kombination von Komponente B-1 und Komponente B-2 (Beispiel 3) höhere Durchstoßenergien erreicht, als mit Zusammensetzungen enthaltend Komponente A-1 (Beispiele V1 und V2). Die Daten zum MVR vor und nach Hydrolyse sowie der Gehalt an freiem BPA zeigen darüber hinaus, dass Komponente A-2 im Vergleich zu Komponente A-1 die Zusammensetzung weniger empfindlich gegenüber hydrolytischem Abbau aufgrund der Lagerung unter hoher Luftfeuchtigkeit bei gleichzeitiger thermischer Einwirkung sowie aufgrund von Restfeuchte unter Compoundierungsbedingungen macht. Das erfindungsgemäße Beispiel 5 zeigt, dass auch die vollständig neutralisierte Komponente B-2 die Aufgabe erfüllt. Das erfindungsgemäße Beispiel 6 zeigt, dass auch eine partiell neutralisierte, teilweise vernetzte Komponente B-3 die Aufgabe erfüllt. Das erfindungsgemäße Beispiel 7 zeigt, dass auch ein partiell mit einer Kationen enthaltenden Base (Natriumhydroxid) neutralisiertes Copolymer bestehend aus Styrolsulfonsäure und Maleinsäure (Komponente B-4) die Aufgabe erfüllt. Das erfindungsgemäße Beispiel 9 zeigt, dass auch ein Masterbatch von einer teilweise neutralisierten Polyacrylsäure mit Polyethylen als Komponente B-5 die Aufgabe erfüllt und die mit einem solchen Masterbatch flammwidrig ausgerüsteten Formmassen geringe Differenzen der MVR Messungen vor und nach Hydrolyse auch unter höherer thermischer Belastung sowie höherer Stempellast, d.h. eine verbesserte Hydrolysebeständigkeit aufweisen.

## Patentansprüche

1. Flammschutzmittelzubereitung enthaltend
A) eine Verbindung oder eine Zusammensetzung aus mehreren Verbindungen, wobei die Verbindung oder die Zusammensetzung Stickstoff und Phosphor aber keine Amino- und Ammoniumgruppen enthält, und
B) ein Polymer enthaltend Brönstedt-saure Gruppen enthaltende Struktureinheiten oder deren Salze, wobei der Gehalt an Brönstedt-saure Gruppen enthaltenden Struktureinheiten oder deren Salze in der Komponente B mindestens 50 Gew.% beträgt.

2. Flammschutzmittelzubereitung gemäß Anspruch 1, **dadurch gekennzeichnet, dass** die Komponente A ein Phosphazen ist.

3. Flammschutzmittelzubereitung gemäß Anspruch 2, **dadurch gekennzeichnet, dass** die Komponente A ein cyclisches Phosphazen gemäß Formel (2) ist 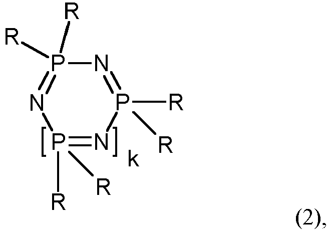 wobei
R gleich oder verschieden sind und jeweils für
- C₁- bis C₈-Alkyl, vorzugsweise Methyl, Ethyl, Propyl oder Butyl,
- C₁- bis C₈- Alkoxy, vorzugsweise Methoxy, Ethoxy, Propoxy oder Butoxy,
- gegebenenfalls durch Alkyl, vorzugsweise C₁-C₄-Alkyl, substituiertes C₅- bis C₆-Cycloalkyl,
- gegebenenfalls durch Alkyl, vorzugsweise C₁-C₄-Alkyl und/oder Hydroxy-substituiertes, C₆- bis C₂₀-Aryloxy, vorzugsweise Phenoxy, Naphthyloxy,
- gegebenenfalls durch Alkyl, vorzugsweise C₁-C₄-Alkyl, substituiertes C₇- bis C₁₂-Aralkyl, vorzugsweise Phenyl-C₁-C₄-alkyl, oder
- einen OH-Rest stehen und
k für 0 oder eine ganze Zahl von 1 bis 15, vorzugsweise für eine Zahl von 1 bis 10 steht.

4. Flammschutzmittelzubereitung gemäß Anspruch 3, **dadurch gekennzeichnet, dass** bei der Komponente A alle Reste R Phenoxyreste sind.

5. Flammschutzmittelzubereitung gemäß einem der vorhergehenden Ansprüche, **dadurch gekennzeichnet, dass** die Komponente B Carboxygruppen oder deren Salze enthält.

6. Flammschutzmittelzubereitung gemäß einem der vorhergehenden Ansprüche, **dadurch gekennzeichnet, dass** die Komponente B Struktureinheiten enthält abgeleitet von einem Monomeren ausgewählt aus der Gruppe bestehend aus Acrylsäure, Methacrylsäure, Maleinsäure und deren jeweiligen Salzen.

7. Flammschutzmittelzubereitung gemäß einem der vorhergehenden Ansprüche, **dadurch gekennzeichnet, dass** als Komponente B ein Polymer eingesetzt wird ausgewählt aus der Gruppe bestehend aus Polyacrylsäure, Polymethacrylsäure und den Salzen der Polyacrylsäure und Polymethacrylsäure.

8. Flammschutzmittelzubereitung gemäß einem der vorhergehenden Ansprüche enthaltend 60 bis 99,5 Gew.-Teile, bezogen auf in Summe 100 Gew.-Teile der Komponenten A und B, der Komponente A und
0,5 bis 40 Gew.-Teile, bezogen auf in Summe 100 Gew.-Teile der Komponenten A und B, der Komponente B.

9. Zusammensetzung enthaltend eine Flammschutzmittelzubereitung oder deren Komponenten, jeweils gemäß einem in den Ansprüchen 1 bis 7 genannten Merkmal, und mindestens ein Polymer gemäß Komponente C.

10. Zusammensetzung gemäß Anspruch 9, enthaltend in Summe 1 bis 40 Gew.-Teile der Komponenten A und B sowie 60 bis 99 Gew.-Teile der Komponente C, jeweils bezogen auf in Summe 100 Gew.-Teile der Komponenten A bis C.

11. Zusammensetzung gemäß einem der Ansprüche 9 oder 10, enthaltend die Komponenten A und B in den im Anspruch 8 genannten Mengenverhältnissen.

12. Zusammensetzung gemäß einem der Ansprüche 9 bis 11, **dadurch gekennzeichnet, dass** Komponente C ein thermoplastisches Polymer ausgewählt aus der Gruppe bestehend aus Polycarbonaten, Polyestercarbonaten, Polyestern, Polyolefinen, Vinyl(co)polymeren und Polyamiden sowie Mischungen daraus ist.

13. Verwendung einer Flammschutzmittelzubereitung enthaltend
A) eine Verbindung oder eine Zusammensetzung aus mehreren Verbindungen, wobei die Verbindung oder die Zusammensetzung Stickstoff und Phosphor aber keine Amino- und Ammoniumgruppen enthält, und
B) ein Polymer enthaltend Brönstedt-saure Gruppen enthaltende Struktureinheiten oder deren Salze, wobei der Gehalt an Brönstedt-saure Gruppen enthaltenden Struktureinheiten oder deren Salze in der Komponente B jeweils mindestens 50 Gew.% beträgt,
zur Reduzierung des brennenden Abtropfens eines Polymers in einem Flammschutztest.

14. Thermoplastische Formmasse hergestellt aus einer Zusammensetzung gemäß Anspruch 12.

15. Formkörper enthaltend eine Zusammensetzung gemäß einer der Ansprüche 9 bis 12 oder erhalten aus einer thermoplastischen Formmasse gemäß Anspruch 14.
